# FASCICULE DE BREVET EUROPEEN

(11) **EP 2 440 496 B1**
(45) Date de publication et mention de la délivrance du brevet: **25.03.2020**
(21) Numéro de dépôt: 10725094.6
(22) Date de dépôt: 09.06.2010
(51) Int. Cl.: C02F 1/28, C02F 1/52, C02F 1/56

(54) **INSTALLATION DE TRAITEMENT DE FLUIDE AQUEUX PAR CONTACT AVEC UN LIT FLUIDISE DE CHARBON ACTIF EN POUDRE COAGULE**
VORRICHTUNG ZUR BEHANLDUNG EINER WÄSSRIGEN FLÜSSIGKEIT MITTELS KONTAKT MIT EINER WIRBELSCHICHT AUS KOAGULIERTEM AKTIVIERTEM KOHLENSTOFF IN PULVERFORM
FACILITY FOR TREATING AN AQUEOUS FLUID BY CONTACT WITH A FLUIDISED BED OF COAGULATED ACTIVATED CARBON IN POWDER FORM

(30) Priorité: 09.06.2009 FR 0953811
(43) Date de publication de la demande: 18.04.2012
(73) Titulaire: SAUR, 78280 Guyancourt (FR)
(72) Inventeur: PEROT, Jean, F-78990 Elancourt (FR)
(74) Mandataire: Regimbeau
(86) Numéro de dépôt international: PCT/EP2010/058116
(87) Numéro de publication internationale: WO 2010/142746

(56) Documents cités:
- WO-A1-02/10077
- WO-A2-99/19257
- DE-A1- 19 507 239
- FR-A1- 2 252 301
- FR-A1- 2 301 481
- FR-A1- 2 628 337
- US-A- 4 659 462
- US-A- 5 932 099

## Description

La présente invention concerne une installation de traitement de fluide aqueux, notamment dans le domaine des eaux à potabiliser et des eaux usées, en particulier pour assurer l'élimination de micropolluants organiques et de matières organiques naturelles, comprenant un réacteur unique de traitement du fluide aqueux par contact avec un lit fluidisé de charbon actif en poudre coagulé et floculé, fonctionnant en flux ascendant.

L'application du charbon actif en dépollution d'eau de consommation ou en traitement d'eau industrielle est largement développée à partir de la filtration sur charbon actif en grain (CAG). Une installation similaire est divulguée dans le document US 4,659,462. La recherche de nouveaux systèmes à base de charbon actif plus performants dans l'élimination des micropolluants organiques et de la matière organique a débouché sur des procédés de traitement à base de charbon actif en poudre (CAP).

Dans la cadre de l'utilisation du charbon actif en poudre dans des technologies spécifiques de mise en œuvre connues dans l'art antérieur, on peut par exemple citer deux méthodes d'emploi soit sous forme de charbon actif en poudre injecté directement au fil de l'eau en amont d'un système de filtration de préférence membranaire, soit sous forme de lit de charbon actif en poudre dans un réacteur spécifique, avec ou sans ajout de coagulant et floculant suivant les technologies. Dans le second cas, les opérations unitaires de contact/séparation des boues de l'eau traitée sont réalisées soit dans des ouvrages séparés de coagulation/floculation/décantation, soit dans un bassin unique avec les décanteurs à lit de boues ou recirculation de boues et les réacteurs à membranes immergées. En outre dans le second cas, il faut nécessairement ajouter des coagulants et/ou des floculants sauf dans le cas des membranes immergées où une telle adjonction n'a pas d'utilité.

La Demanderesse a déjà conçu et développé un système d'affinage à base de lit de boues de charbon actif en poudre coagulé commercialisé sous la dénomination Carboflux®. La Demanderesse a souhaité faire évoluer ce concept à lit de charbon actif en poudre coagulé en retenant une nouvelle technologie de mise en œuvre encore plus compacte avec des gains d'investissement et d'exploitation conséquents.

Ainsi, l'invention concerne le traitement de fluides aqueux, par exemple l'eau pour laquelle on désire éliminer des micropolluants organiques et les matières organiques naturelles.

L'invention s'applique plus précisément à la potabilisation des eaux telles que les eaux de surface et les eaux souterraines avec l'emploi de charbon actif en poudre sous forme fluidisée dans un réacteur unique de contact après adjonction de réactifs de coagulation et floculation. Pour les eaux superficielles, un tel réacteur sera disposé de préférence à l'aval d'une installation de clarification. Pour les eaux souterraines, il pourra être disposé en traitement direct d'eau brute.

Quelle que soit l'origine des eaux à potabiliser, le traitement spécifique au charbon actif sera suivi d'une filtration des eaux traitées sur média granulaire (filtration rapide) ou à l'aide d'un système membranaire (filtration frontale ou tangentielle).

L'application au domaine des eaux usées est aussi envisageable notamment en traitement tertiaire d'Eaux Usées Urbaines (ERU) dans le cadre de l'élimination de micropolluants organiques émergents notamment. Ici, le traitement pourra ou non être suivi d'une étape de filtration suivant l'usage recherché (rejet au milieu naturel, réutilisation).

L'invention intéresse plus particulièrement l'emploi de charbon actif en poudre dans un ouvrage spécifique de traitement fonctionnant en flux ascendant au sein duquel le brassage hydraulique est assuré par l'intermédiaire d'une rampe de dispersion d'eau à traiter disposée en fond d'ouvrage.

Les caractéristiques essentielles de l'installation et de son utilisation sont décrites dans les revendications 1 et 17, 18. Des modes de réalisation préférés sont décrits dans les revendications 2-16 et 19-21.

Conformément à la présente invention, en particulier pour l'ensemble des domaines d'application où l'on recherche l'élimination de composés organiques par adsorption, le réacteur de l'invention est équipé de moyens d'injection de charbon actif en poudre neuf, de coagulant et de polymère, agencés en coordination avec le circuit d'alimentation d'eau de manière à définir dans le réacteur trois zones distinctes de fonctionnement :
- une première zone aménagée à la base du réacteur pour assurer l'admission et la répartition homogène du fluide aqueux prétraité par contact avec le coagulant et le polymère,
- une seconde zone, surmontant la première, constituée par le lit fluidisé de charbon actif en poudre coagulé et floculé, et
- une troisième zone, aménagée à la partie haute du réacteur de séparation et de récupération du liquide aqueux épuré.

Selon une autre caractéristique de l'invention, les moyens d'injection (circuit d'admission) de charbon actif en poudre neuf sont associés à un circuit d'extraction de charbon actif en poudre usagé du lit fluidisé, disposé dans la partie inférieure de la seconde zone du réacteur.

Selon l'invention, le réacteur comporte un lit fluidisé de charbon actif en poudre, coagulé et floculé. Les concentrations peuvent atteindre plusieurs grammes par litre, avantageusement entre 1 et 10 g/l, et en particulier ajustables suivant la nature du charbon retenu, ses caractéristiques granulométriques et la vitesse de fluidisation imposé dans l'ouvrage de contact.

Selon l'invention, un brassage hydraulique est assuré au sein du lit fluidisé par l'intermédiaire d'au moins une rampe de dispersion du fluide aqueux à traiter, aménagée dans la première zone à la base du réacteur.

Selon une autre caractéristique de l'invention, le brassage hydraulique est assuré par un système constitué d'un distributeur se présentant sous la forme d'une pluralité de rampes de dispersion percées d'orifices disposés de manière équidistante et dirigés vers le fond du réacteur et constituant le réseau de distribution hydraulique.

Selon l'invention, l'ensemble du système de répartition du liquide aqueux est noyé dans un garnissage avantageusement constitué par un lit de gravier reposant sur le fond du réacteur et couvrant le réseau de distribution hydraulique surmonté par un lit de sable.

Le réacteur comporte dans sa troisième zone aménagée en partie haute, une goulotte de reprise pour canaliser le liquide aqueux épuré.

L'installation comporte des moyens d'injection de coagulant au sein du lit fluidisé, ainsi que des moyens d'injection de coagulant dans le circuit d'alimentation en liquide aqueux, en amont de la première zone d'admission aménagée en partie basse du réacteur.

Les moyens d'injection de coagulant au sein du lit fluidisé débouchent sur une hauteur de lit fluidisé s'étendant entre sa partie basse et sa partie médiane de préférence pour favoriser le piégeage et l'agglomération des particules de charbon neuf injecté sous forme de flocs d'hydroxydes.

Ainsi, l'emploi de coagulant est indispensable pour maintenir le charbon dans le réacteur en zone (B) en piégeant les particules de charbon sous forme de flocs, aptes à décanter.

Selon une caractéristique avantageuse de l'invention, les moyens d'injection de coagulant dans le circuit d'alimentation sont munis d'un système de mélange, mécanique et/ou statique.

Selon une autre caractéristique de l'invention, l'installation comporte des moyens d'injection de polymère en ligne sur le circuit d'alimentation en liquide aqueux préalablement coagulé, et/ou au moyen d'une rampe spécifique d'injection de polymère disposée au sein du lit fluidisé, immédiatement au-dessus de la première zone aménagée à la partie basse du réacteur.

Selon une caractéristique avantageuse de l'invention, l'installation comporte un circuit de recirculation de l'eau traitée débouchant en amont de la rampe d'admission pour assurer une fonction de maintien du lit fluidisé pendant les arrêts de production sur le réacteur.

De manière particulièrement avantageuse selon la présente invention, l'installation comporte un circuit d'introduction d'air (32) connecté à la rampe de dispersion d'eau (12), assurant le détassage du lit de charbon actif en cas d'arrêt prolongé du réacteur sans recirculation d'eau.

Selon une autre caractéristique de l'invention, le réacteur est équipé d'un dispositif de collecte de boues aménagé dans la troisième zone haute du réacteur afin d'assurer un soutirage des boues de CAP coagulé en cas de nécessité, par exemple si la hauteur du lit augmente au-delà d'une valeur limite fixée par l'utilisateur ou pour d'autres besoins du domaine de l'exploitation du procédé.

Selon une autre caractéristique de l'invention, le réacteur affecte une forme cylindrique de section circulaire ou polygonale dont les dimensions sont choisies pour permettre d'assurer une vitesse ascensionnelle du liquide aqueux comprise entre 6 et 10 m³/m².h.

Selon une caractéristique avantageuse de l'invention, le réacteur présente une hauteur utile comprise entre 3,9 m et 6 m.

Selon une autre caractéristique de l'invention, le charbon actif en poudre présente une densité apparente comprise entre 0,30 et 0,60 kg/l.

Selon une autre caractéristique de l'invention, le charbon actif en poudre présente une granulométrie représentative de tailles de particules inférieures à 100 µm, avantageusement entre 1 et 45 µm, typiquement entre 3 et 35 µm.

Dans le cadre de la présente invention, l'emploi de charbon actif en poudre (CAP) avec une taille de particules inférieure à 100 µm apporte des gains épuratoires accrus par rapport à des technologies antérieures utilisant du charbon actif en grain avec des tailles de particules plus élevées. En effet, le CAP permet d'augmenter les capacités d'adsorption et de réduire les consommations en adsorbant en relation à la taille des particules.

La présente demande concerne également l'utilisation d'une installation telle que définie précédemment pour la potabilisation des eaux de surface, impliquant une clarification préalable des eaux à traiter ou encore pour la potabilisation des eaux souterraines par traitement direct des eaux brutes.

Selon une autre caractéristique de l'invention, le traitement par contact du lit fluidisé dans le réacteur est suivi d'une filtration des eaux traitées, sur media granulaire ou sur système membranaire.

Selon une autre caractéristique de l'invention, du charbon actif neuf en poudre est injecté à une dose apte à assurer le renouvellement continu du lit de charbon fluidisé, qui est d'au moins 3 à 5 mg/l pour éliminer des micropolluants organiques.

Selon une autre caractéristique de l'invention, du charbon actif neuf en poudre est injecté à une dose apte à assurer le renouvellement continu du lit de charbon fluidisé, qui est d'au moins 5 à 10 mg/l dans l'élimination des matières organiques naturelles.

La technologie mise en œuvre permet l'obtention d'un lit de charbon actif coagulé et floculé pouvant atteindre plusieurs grammes par litre sur plusieurs mètres de hauteur.

Avantageusement, la concentration moyenne du lit fluidisé de charbon actif en poudre dans le réacteur (zone B) est comprise entre 1 et 10 g/l, typiquement entre 3 et 7 g/l.

Avantageusement, la hauteur de fluidisation sera comprise entre 1,5 et 4 m dans le réacteur (zone B), typiquement entre 2 et 3 m.

Le passage d'eau brute au travers du lit de charbon actif en poudre assure le traitement de dépollution en micropolluants organiques et matières organiques naturelles suivant différents modes possibles en fonction de la nature du polluant (adsorption sur les particules de charbon et piégeage sur les hydroxydes métalliques). Aucun brassage mécanique n'est nécessaire, le brassage à l'eau du lit de boues créé par l'hydraulique de la rampe de dispersion évite le tassement en fond d'ouvrage et tout passage préférentiel d'eau. L'eau épurée est canalisée à partir de goulottes de reprise disposées en partie haute d'ouvrage.

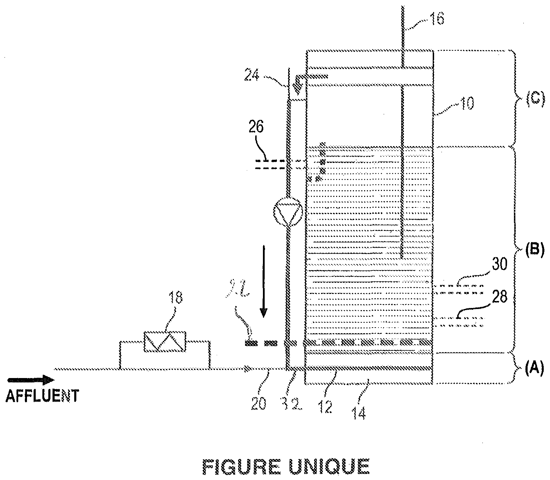

L'obtention d'un lit de boues fluidisé n'est possible que grâce à la mise en place de dispositifs précis d'injection de coagulant, charbon actif en poudre neuf et polymère dans l'installation dont le schéma de principe général se trouve illustré à la Figure unique annexée sur laquelle apparaissent les différentes zones précises d'introduction correspondantes.

Pour assurer une bonne répartition de l'eau arrivant en fond du réacteur 10, l'installation comporte un distributeur 12 sur lequel sont disposés des jeux de ramifications équidistantes et percées de trous sur chacune d'entre elle à intervalles identiques et dirigés de préférence vers le fond en quinconce alterné. L'ensemble d'un tel répartiteur est noyé dans un garnissage 14, avantageusement constitué d'un lit de gravier reposant sur le fond du réacteur 10 et sur lequel repose un lit de sable. Un tel ensemble constitue une première zone aménagée (A) assurant la répartition homogène de l'eau d'alimentation à la base du réacteur 10.

Conformément à la présente invention, une injection de coagulant s'établit à deux niveaux différents, à savoir par :
1/ dosages simultanés de coagulant et charbon actif en poudre neuf au sein d'un rampe d'admission 16 débouchant dans le lit de boues (B) et de préférence en partie basse à médiane sur la hauteur de ce lit fluidisé ; et
2/ dosage de coagulant en amont de la rampe d'admission 12 d'eau brute ou affluent.

Ce mode de fonctionnement permet d'ajuster parfaitement la part de coagulant à mettre en œuvre vis-à-vis de la coagulation des particules de charbon introduites dans le réacteur et la part liée au contrôle global de la tenue du lit de charbon actif fluidisé dans le temps et aux besoins propres à l'eau à traiter sur l'ouvrage. Le circuit d'injection de coagulant en amont de la rampe d'admission 12, pourra être pourvu d'un système de mélange mécanique ou statique 18 afin d'accélérer la dispersion du réactif avant passage dans la rampe d'admission d'eau brute 12.

Tel que cela se trouve schématisé sur le dessin annexé, la présente invention prévoit donc l'injection de coagulant à deux niveaux avec le dosage de réactif sur le circuit d'alimentation en eau à traiter et le poste de préparation/dosage de charbon actif en poudre.
- Pour la mise en œuvre de la présente invention, on peut retenir l'ensemble des coagulants à base de fer et d'aluminium, par exemple le chlorure ferrique et le sulfate ferrique pour le fer, le sulfate d'aluminium et les produits commerciaux WAC, WAC HB et Aqualenc pour l'aluminium.
- L'homme du métier saura déterminer les taux de traitement en coagulant en fonction du dosage en CAP. L'addition des doses de coagulant employé aux 2 niveaux énoncés ci-avant peut atteindre un rapport massique Fe/CAP compris entre 54 et 140 mg Fe g⁻¹ CAP pour les réactifs à base de fer et un rapport massique Al/CAP compris entre 17 et 44 mg Al g⁻¹ CAP pour les réactifs à base d'aluminium.
- Avantageusement : la dose totale de réactif coagulant est répartie sur les deux circuits dans une fourchette comprise entre 20 et 80 %.

A titre d'exemple de distribution des doses de coagulant, on mentionnera les conditions suivantes :
Dosage en charbon actif en poudre : 5 g m⁻³
Coagulant employé : Chlorure ferrique sous forme liquide à 40-41 % en poids de FeCl₃ pur
Rapport massique Fe / CAP optimal : 140 mg Fe g⁻¹ CAP

**Répartition du coagulant et taux de traitement :**

| | Taux de traitement en coagulant | | Rapport massique Fe/CAP | Répartition |
|---|---|---|---|---|
| | (g Fe m⁻³) | (g FeCl₃m⁻³) | (mgFe g⁻¹ CAP) | (%) |
| Sur le circuit d'eau brute | 0,233 | 0,68 | 46,7 | 33,3 |
| Sur le poste de dosage en CAP neuf | 0,467 | 1,36 | 93,3 | 66,7 |

Conformément à la présente invention, il y a également lieu de prévoir dans l'installation précédemment décrite une injection de polymère en ligne sur le circuit d'eau brute préalablement coagulée 20 et/ou par une rampe spécifique 22 disposée au sein du lit de charbon au dessus de la zone aménagée (A).

Par ailleurs, l'emploi de polymère est essentiel dans le procédé si l'on désire maintenir un lit de charbon actif fluidisé compact de plusieurs grammes par litre avec une zone de séparation entre l'eau traitée et le lit de charbon, bien identifiée. La zone aménagée (A) permet une dispersion optimale du réactif polymère de floculation à la base du lit (B) de boues suivant la voie 22. La dispersion par une rampe d'admission dans le réacteur reste une alternative possible 20.

Dans le cadre de la présente invention, l'emploi d'adjuvants de floculation est indispensable dans la constitution du lit de charbon actif fluidisé en produisant des flocs denses de particules de charbon complexés par pontage des flocs de charbon coagulé et floculé résultant de l'action du coagulant. On retiendra de préférence les floculants acryliques comme les polyacrylamides anioniques et non ioniques. Le choix de la dose est à adapter suivant la nature des eaux et les caractéristiques du charbon actif employé. Les taux de traitement peuvent être compris dans une fourchette allant de 0,1 à 0,5 mg.L⁻¹.

Dans le cadre de la production d'eau destinée à la consommation humaine, le traitement dans ce réacteur 10 doit être suivi d'une étape de filtration.

L'ensemble des procédés industriels de filtration sur média granulaire et des procédés membranaires sont susceptibles d'être placés à l'aval du traitement au charbon actif. On peut citer par exemple la filtration sur sable ou la filtration sur membrane d'ultrafiltration. Le choix des systèmes et des règles d'exploitation sont assujettis à la nature des eaux à traiter sur le réacteur à lit de charbon fluidisé.

Pour l'incorporation du procédé en traitement d'eau superficielle nécessitant de par la nature de la ressource une étape de clarification et de filtration, on disposera le réacteur 10 entre les traitements de clarification et de filtration. On entend ici par le terme de clarification les étapes fondamentales de coagulation, floculation et décantation (ou flottation) que doit subir l'eau brute avant son passage sur une étape de filtration. Dans le cadre de l'utilisation d'une étape d'oxydation à l'ozone, on placera avantageusement le traitement à l'amont du traitement d'affinage au charbon actif comme cela est retrouvé sur les filières de traitement industriel conventionnelles à l'amont d'un traitement d'affinage à base de charbon actif. Avec cette configuration classique de filière de traitement, on disposera de différentes alternatives dans le devenir du charbon actif en poudre usagé extrait du réacteur à charbon actif en poudre coagulé avec :
- le recyclage du charbon actif en poudre au niveau de la clarification à l'amont de la floculation précédant la décantation ; sans intérêt si l'étape de séparation est constituée d'une flottation ;
- l'incorporation des boues de charbon actif en poudre usagé sur la filière boues issue de la clarification ou leur traitement sur une filière boues spécifiques au traitement d'affinage.

En traitement d'eau souterraine pour laquelle on ne doit éliminer que des micropolluants organiques, on placera le procédé en traitement direct d'eau brute. L'affinage au charbon sera suivi d'une étape de filtration. Pour les eaux nécessitant des mesures correctives dans l'élimination des matières en suspension (MES), de la turbidité et de métaux comme le fer et le manganèse par exemple, on placera le traitement d'affinage en traitement direct d'eau brute si l'on prévoit l'élimination de ces composés sur une unité de filtration en solution de base, dans le cas où une clarification est proposée, le traitement d'affinage est placé en aval de cette dernière ; la filtration est disposée dans tous les cas en post-traitement.

Le réacteur 10 comporte enfin dans sa troisième zone aménagée en partie haute (C), une goulotte de reprise 24 pour canaliser l'eau épurée.

La mise en place d'un circuit de recirculation d'eau traitée 24 par jeu de pompe(s) non représenté débouchant à l'amont de la rampe d'admission 12 a pour fonction de maintenir un lit de boues fluidisé (B) pendant les arrêts de production sur l'ouvrage. Les objectifs sont les suivants :
- le maintien d'un lit fluidisé (B) pendant les arrêts de production afin d'éviter le tassement des boues de charbon actif en poudre durant la période qui seront plus difficilement expansées rapidement à la reprise de l'alimentation en affluent ;
- le maintien de conditions aérobies au sein du lit de boues par passage d'eau saturée en oxygène dissous afin d'éviter les formations de nitrites et ammonium associées à des problèmes de fermentation biologique intervenant en anaérobiose.

On pourra avantageusement mettre en service le dispositif en régime de production dans des cas particuliers lorsque le débit d'alimentation s'avère insuffisant dans la création d'un lit suffisamment expansé. Ce mode de fonctionnement peut être nécessaire lorsque l'installation est dimensionnée sur des plages de débits d'alimentation étendues.

De manière particulièrement avantageuse selon la présente invention, le réacteur est équipé d'un circuit d'air (32) de détassage directement connecté à la rampe d'admission d'eau brute (12). Il a pour fonction le détassage du lit de CAP lorsque le réacteur est resté isolé sur de longues durées sans recirculation d'eau traitée avant la remise en service.

Le réacteur peut être équipé d'un ouvrage de collecte de boues 26 en partie supérieure d'ouvrage si l'on désire sécuriser le système face à des remontées excessives du lit de boues liées à des dégradations de l'eau à traiter avec la présence de matières en suspension piégées dans le lit de boues, la conséquence étant l'augmentation du volume du lit. Ici, les boues en excès débouchent dans une fosse permettant leurs soutirages hors de l'ouvrage.

Le renouvellement en charbon du lit de CAP coagulé est obtenu par le jeu d'un circuit d'admission 16 de charbon neuf, au sein du lit fluidisé en zone (B), et d'un circuit d'extraction 28 de charbon actif en poudre usagé du lit fluidisé disposé de préférence en partie basse à médiane d'ouvrage au dessus de la zone aménagée (A).

L'extraction du charbon actif en poudre usagé du lit de boues peut être effectuée par pompage à l'aide d'une pompe doseuse ou par soutirage gravitaire par le biais d'une canalisation d'extraction au sein du lit de charbon suivant 30 ou par le jeu d'un concentrateur à boues ou les flocs de charbon actif en poudre sont recueillis à partir d'une surverse en 26, les deux systèmes d'extraction de CAP pouvant être combinés.

Dans ce dernier cas, l'ouvrage de collecte de boues 26 sécurise le système face à des remontées excessives du lit de boues liées à des dégradations de l'eau à traiter avec la présence de matières en suspension piégées dans le lit de boues. La hauteur du lit de boue peut alors être maintenue au niveau de la zone de soutirage vers une fosse à boues.

Conformément à la présente invention, les exigences de dimensions d'ouvrages sont assujetties à la nécessité de fluidiser le matériau à l'intérieur du réacteur de contact/séparation et à la recherche d'un temps de contact dans le lit de charbon actif en poudre non limitant vis-à-vis des fonctions épuratoires recherchées. Les ouvrages de préférence de section cylindrique peuvent être indifféremment de section circulaire ou carrée.

Les dimensions d'ouvrage doivent avantageusement tenir compte des paramètres suivants :
- vitesses ascensionnelles comprises entre 2 à 12 m³/m².h et de préférence entre 6 et 10 m³/m².h ;
- des temps de contact dans le lit de charbon en adéquation avec la nature du ou des micropolluants organiques à éliminer et des caractéristiques du charbon en poudre retenu (nature, origine et granulométrie) ; le temps de contact est assimilé au temps de séjour hydraulique en fût vide correspondant au volume occupé par le matériau adsorbant sous forme d'un lit fluidisé.

Le choix des vitesses hydrauliques tient compte de l'origine du charbon sur le plan des caractéristiques de densité et de granulométrie avec des produits ayant des densités apparentes comprises entre 0,30 et 0,6 kg/L et des tailles couvrant le domaine des charbons actifs en poudre avec des granulométries allant de quelques microns : 3 - 5 µm à plusieurs dizaines de microns (15 à 45 µm ou 80 à 99 µm par exemple). Les temps de contacts sont compris dans une large gamme de valeurs possibles suivant les applications et les besoins épuratoires comme tout système classique à base d'adsorbant. On peut avancer par exemple des valeurs guides comprises entre 10 et 30 minutes en traitement d'affinage d'eau superficielle ayant subi au préalable un traitement de clarification si l'on désire éliminer des micropolluants organiques avec par exemple les pesticides ou des matières organiques naturelles réfractaires aux prétraitements initiaux. Dans le cadre d'applications spécifiques en milieu industriel ou dans le domaine des eaux usées, on pourra prolonger les temps de contact au delà des 30 à 60 minutes afin de répondre à de très fortes charges organiques à éliminer et/ou à s'adapter à des niveaux de pollution élevés en micropolluants organiques. Les dosages de charbon neuf assurant le renouvellement continu du lit de charbon fluidisé seront choisis suivant la nature de la pollution et les objectifs de dépollution. Nous pourrons par exemple travailler sur des gammes de dosage comprises entre 3 et 5 mg/l dans l'élimination de micropolluants organiques et 5 à 10 mg/l dans l'élimination des matières organiques naturelles. Les doses seront encore augmentées dans le cadre de traitement spécifique et pourront être portée à plusieurs dizaines ou centaines de milligramme par litre suivant les charges polluantes et la nature des molécules organiques à éliminer.

On indiquera ci-après à titre de simple illustration, un exemple particulier de dimensionnement hydraulique de l'installation de traitement selon l'invention destiné à une application "eau potable" ou "affinage d'eau superficielle après clarification". Les conditions particulières mentionnées ci-après ont conduit à des résultats parfaitement satisfaisants dans la pratique.
Débit nominal : 200 m³/h
Production journalière : 4000 m³/j
Nombre d'ouvrage : 1
Vitesse ascensionnelle : 8 m³/m².h
Temps de contact : 20 min
Section : carrée
Volume de lit de charbon fluidisé : proche de 66,7 m³
Concentration de travail en charbon actif coagulé et floculé : proche des 5 g.L⁻¹

### Caractéristiques d'ouvrage :

Longueur : 5 m
Largeur : 5 m
Hauteur utile d'ouvrage : 4,8 m
Détails :
- Hauteur de la zone aménagée : 0,6 m
- Hauteur de fluidisation du lit de charbon actif au débit nominal: proche de 2,7 m
- (Valeur indicative à la température d'eau de 6°C)
- Hauteur de garde : 1,5 m (Distance du sommet du lit au niveau de restitution des eaux traitées).

## Revendications

1. Installation de traitement de fluide aqueux, en particulier pour assurer l'élimination de micropolluants organiques et de matières organiques naturelles, comprenant un réacteur unique (10) de traitement du fluide aqueux par contact avec un lit fluidisé de charbon actif en poudre coagulé et floculé, fonctionnant en flux ascendant, ledit réacteur comportant un lit fluidisé de charbon actif en poudre, coagulé et floculé et étant équipé de moyens d'injection de charbon actif en poudre neuf, de coagulant et de polymère, agencés de manière à définir dans le réacteur trois zones distinctes de fonctionnement :
• une première zone aménagée (A) à la base du réacteur comprenant un garnissage avantageusement constitué par un lit de gravier surmonté par un lit de sable pour assurer l'admission et la répartition homogène du fluide aqueux prétraité par contact avec le coagulant et le polymère,
• une seconde zone, surmontant la première, constituée par le lit fluidisé de charbon actif en poudre coagulé et floculé (B), et
• une troisième zone (C), aménagée à la partie haute du réacteur de séparation et de récupération du liquide aqueux épuré, dans laquelle,
• un brassage hydraulique est assuré au sein du lit fluidisé par l'intermédiaire d'au moins une rampe de dispersion (12) du fluide aqueux à traiter, aménagée dans la première zone (A) à la base du réacteur
• une rampe d'admission (16) débouchant dans la zone (B) en partie basse à médiane sur la hauteur de ce lit fluidisé (B), ladite rampe d'admission (16) étant reliée à des moyens d'injection de coagulant et de charbon actif en poudre neuf ;
• des moyens d'injection de coagulant connecté au circuit d'alimentation aqueux (20) ;
• le réacteur comporte dans sa troisième zone aménagée en partie haute (C), une goulotte de reprise (24) pour canaliser le liquide aqueux épuré.

2. Installation selon la revendication 1, **caractérisée en ce qu'**aux moyens d'injection de charbon actif en poudre neuf est associé un circuit d'extraction de charbon actif en poudre usagé du lit fluidisé, disposé dans la partie inférieure de la seconde zone (B) du réacteur (10).

3. Installation selon l'une des revendications 1 et 2, **caractérisée en ce que** le lit fluidisé de charbon actif en poudre, coagulé et floculé est à des concentrations pouvant atteindre plusieurs grammes par litre, avantageusement entre 1 et 10 g/l.

4. Installation selon l'une des revendications 1 à 3, **caractérisée en ce que** le brassage hydraulique est assuré par un système constitué d'un distributeur se présentant sous la forme d'une pluralité de rampes de dispersion percées d'orifices disposés de manière équidistante et dirigés vers le fond du réacteur.

5. Installation selon la revendication 4, **caractérisée en ce que** l'ensemble du système de répartition du liquide aqueux est noyé dans un garnissage constitué par un lit de gravier reposant sur le fond du réacteur et couvrant le réseau de distribution hydraulique surmonté par un lit de sable.

6. Installation selon l'une des revendications 1 à 5, **caractérisée en ce qu'**elle comporte des moyens d'injection de coagulant dans le circuit d'alimentation en liquide aqueux, en amont de la première zone d'admission aménagée en partie basse du réacteur.

7. Installation selon l'une des revendications 1 à 6, **caractérisée en ce que** les moyens d'injection de coagulant au sein du lit fluidisé débouchent sur une hauteur de lit fluidisé s'étendant entre sa partie basse et sa partie médiane.

8. Installation selon l'une des revendications 1 à 7, **caractérisée en ce que** les moyens d'injection de coagulant dans le circuit d'alimentation sont munis d'un système de mélange (18), mécanique et/ou statique.

9. Installation selon l'une des revendications 1 à 8, **caractérisée en ce qu'**elle comporte des moyens d'injection de polymère en ligne sur le circuit d'alimentation en liquide aqueux préalablement coagulé, et/ou au moyen d'une rampe spécifique d'injection de polymère disposée au sein du lit fluidisé, immédiatement au-dessus de la première zone aménagée (A) à la partie basse du réacteur (10).

10. Installation selon l'une des revendications 1 à 9, **caractérisée en ce qu'**elle comporte un circuit de recirculation de l'eau traitée débouchant en amont de la rampe d'admission pour assurer une fonction de maintien du lit fluidisé pendant les arrêts de production sur le réacteur.

11. Installation selon l'une des revendications 1 à 10, **caractérisée en ce qu'**elle comporte un circuit d'introduction d'air (32) connecté à la rampe de dispersion d'eau.

12. Installation selon l'une des revendications 1 à 11, **caractérisée en ce que** le réacteur est équipé d'un dispositif de collecte de boues aménagé en dessous de la troisième zone haute (C) du réacteur afin d'assurer un soutirage des boues de CAP coagulé en cas de nécessité.

13. Installation selon l'une des revendications 1 à 12, **caractérisée en ce que** le réacteur affecte une forme cylindrique de section circulaire ou polygonale dont les dimensions sont choisies pour permettre d'assurer une vitesse ascensionnelle du liquide aqueux comprise entre 6 et 10 m³/m².h.

14. Installation selon l'une des revendications 1 à 13, **caractérisée en ce que** le réacteur présente une hauteur utile comprise entre 3,9 m et 6 m.

15. Installation selon l'une des revendications 1 à 14, **caractérisée en ce que** le charbon actif en poudre présente une densité apparente comprise entre 0,30 et 0,60 kg/l.

16. Installation selon l'une des revendications 1 à 15, **caractérisée en ce que** le charbon actif en poudre présente une granulométrie représentative de tailles de particules inférieures à 100 µm, avantageusement entre 1 et 45 µm.

17. Utilisation d'une installation selon l'une des revendications 1 à 16, pour la potabilisation des eaux de surface, impliquant une clarification préalable des eaux à traiter.

18. Utilisation d'une installation selon l'une des revendications 1 à 16, pour la potabilisation des eaux souterraines par traitement direct des eaux brutes.

19. Utilisation selon l'une des revendications 17 à 18, **caractérisée en ce que** le traitement par contact du lit fluidisé dans le réacteur est suivi d'une filtration des eaux traitées, sur média granulaire ou sur système membranaire.

20. Utilisation selon l'une des revendications 17 à 19, **caractérisée en ce que** du charbon actif neuf en poudre est injecté à une dose apte à assurer le renouvellement continu du lit de charbon fluidisé, qui est d'au moins 3 à 5 mg/l pour éliminer des micropolluants organiques.

21. Utilisation selon l'une des revendications 17 à 19, **caractérisée en ce que** du charbon actif neuf en poudre est injecté à une dose apte à assurer le renouvellement continu du lit de charbon fluidisé, qui est d'au moins 5 à 10 mg/l dans l'élimination des matières organiques naturelles.

## Patentansprüche

1. Anlage zur Behandlung von wässrigem Fluid, vor allem, um die Ausleitung von organischen Mikroschadstoffen und von natürlichen organischen Stoffen zu gewährleisten, umfassend einen einzigen Reaktor (10) für die Behandlung des wässrigen Fluids durch Kontakt mit einer Wirbelschicht aus koagulierter und geflockter Aktivkohle in Pulverform, der im Aufwärtsstrom arbeitet, wobei der Reaktor eine Wirbelschicht aus koagulierter und geflockter Aktivkohle in Pulverform aufweist und mit Mitteln zum Einleiten von neuer Aktivkohle in Pulverform, von Koagulationsmittel und von Polymer ausgestattet ist, die derart eingerichtet sind, dass in dem Reaktor drei unterschiedliche Betriebszonen definiert sind:
• eine erste Zone (A), die an der Basis des Reaktors eingerichtet ist, umfassend eine Auskleidung, die in vorteilhafter Weise aus einer Kiesschicht besteht, mit einer Sandschicht darüber, um die Aufnahme und die gleichmäßige Verteilung des durch Kontakt mit dem Koagulationsmittel und dem Polymer vorbehandelten wässrigen Fluids zu gewährleisten,
• eine zweite Zone über der ersten, bestehend aus der Wirbelschicht aus koagulierter und geflockter Aktivkohle in Pulverform (B), und
• eine dritte Zone (C), die im oberen Abschnitt des Reaktors eingerichtet ist, zur Trennung und zur Rückgewinnung der gereinigten wässrigen Flüssigkeit,
wobei
• ein hydraulisches Rühren innerhalb der Wirbelschicht mit Hilfe von mindestens einem Dispersionsrohr (12) des zu behandelnden wässrigen Fluids, das in der ersten Zone (A) an der Basis des Reaktors eingerichtet ist, gewährleistet wird,
• ein Zuleitungsrohr (16) in die Zone (B) im unteren bis mittleren Abschnitt auf der Höhe dieser fluidisierten Schicht (B) ausmündet, wobei das Zuleitungsrohr (16) mit Mitteln zum Einleiten von Koagulationsmittel und von neuer Aktivkohle in Pulverform verbunden ist,
• Mittel zum Einleiten von Koagulationsmittel mit dem Wasserversorgungskreis (20) gekoppelt sind,
• der Reaktor in seiner dritten Zone, die im oberen Abschnitt (C) eingerichtet ist, eine Aufnahmerinne (24) für die Kanalisierung der gereinigten wässrigen Flüssigkeit aufweist.

2. Anlage nach Anspruch 1, **dadurch gekennzeichnet, dass** den Mitteln zum Einleiten von neuer Aktivkohle in Pulverform ein Kreis zum Ausleiten von verbrauchter Aktivkohle in Pulverform aus der Wirbelschicht zugeordnet ist, der im unteren Abschnitt der zweiten Zone (B) des Reaktors (10) angeordnet ist.

3. Anlage nach einem der Ansprüche 1 und 2, **dadurch gekennzeichnet, dass** die Wirbelschicht aus koagulierter und geflockter Aktivkohle in Pulverform in Konzentrationen vorliegt, die mehrere Gramm je Liter, in vorteilhafter Weise zwischen 1 und 10 g/l, erreichen können.

4. Anlage nach einem der Ansprüche 1 bis 3, **dadurch gekennzeichnet, dass** das hydraulische Rühren von einem System gewährleistet wird, das aus einem Verteiler besteht, der in Form einer Vielzahl von Dispersionsrohren mit gebohrten Öffnungen vorliegt, die gleichmäßig beabstandet angeordnet und zum Boden des Reaktors gerichtet sind.

5. Anlage nach Anspruch 4, **dadurch gekennzeichnet, dass** das gesamte System zum Verteilen der wässrigen Flüssigkeit in eine Auskleidung eingelassen ist, die von einer Kiesschicht gebildet ist, die auf dem Boden des Reaktors aufliegt und das hydraulische Verteilernetz bedeckt, mit einer Sandschicht darüber.

6. Anlage nach einem der Ansprüche 1 bis 5, **dadurch gekennzeichnet, dass** sie Mittel zum Einleiten von Koagulationsmittel in den Versorgungskreis mit wässriger Flüssigkeit vor der ersten Aufnahmezone aufweist, die im unteren Abschnitt des Reaktors eingerichtet ist.

7. Anlage nach einem der Ansprüche 1 bis 6, **dadurch gekennzeichnet, dass** die Mittel zum Einleiten von Koagulationsmittel in die Wirbelschicht auf einer Höhe der Wirbelschicht ausmünden, die sich zwischen ihrem unteren Abschnitt und ihrem mittleren Abschnitt erstreckt.

8. Anlage nach einem der Ansprüche 1 bis 7, **dadurch gekennzeichnet, dass** die Mittel zum Einleiten von Koagulationsmittel in den Versorgungskreis mit einem mechanischen und/oder statischen Mischsystem (18) ausgestattet sind.

9. Anlage nach einem der Ansprüche 1 bis 8, **dadurch gekennzeichnet, dass** sie Leitungsmittel zum Einleiten von Polymer über den Versorgungskreis mit zuvor koagulierter wässriger Flüssigkeit und/oder mit Hilfe eines speziellen Rohrs zum Einleiten von Polymer, das in der Wirbelschicht angeordnet ist, unmittelbar über der erste Zone (A) aufweist, die im unteren Abschnitt des Reaktors (10) eingerichtet ist.

10. Anlage nach einem der Ansprüche 1 bis 9, **dadurch gekennzeichnet, dass** sie einen Rezirkulationskreis des behandelten Wassers aufweist, der vor dem Zuleitungsrohr ausmündet, um eine Aufrechterhaltungsfunktion der Wirbelschicht während der Produktionsstillstände des Reaktors zu gewährleisten.

11. Anlage nach einem der Ansprüche 1 bis 10, **dadurch gekennzeichnet, dass** sie einen Lufteinleitkreis (32) aufweist, der mit dem Wasserverteilerrohr gekoppelt ist.

12. Anlage nach einem der Ansprüche 1 bis 11, **dadurch gekennzeichnet, dass** der Reaktor mit einer Schlammsammelvorrichtung ausgestattet ist, der unter der oberen dritten Zone (C) des Reaktors eingerichtet ist, um bei Notwendigkeit ein Ableiten der Schlämme koagulierten CAPs zu gewährleisten.

13. Anlage nach einem der Ansprüche 1 bis 12, **dadurch gekennzeichnet, dass** der Reaktor eine zylindrische Form mit kreisförmigem oder polygonalem Querschnitt hat, dessen Abmessungen ausgewählt sind, um die Gewährleistung einer Aufstiegsgeschwindigkeit der wässrigen Flüssigkeit zu erlauben, die zwischen 6 und 10 m³/m².h liegt.

14. Anlage nach einem der Ansprüche 1 bis 13, **dadurch gekennzeichnet, dass** der Reaktor eine Nutzhöhe aufweist, die zwischen 3,9 m und 6 m liegt.

15. Anlage nach einem der Ansprüche 1 bis 14, **dadurch gekennzeichnet, dass** die Aktivkohle in Pulverform eine Schüttdichte aufweist, die zwischen 0,30 und 0,60 kg/l liegt.

16. Anlage nach einem der Ansprüche 1 bis 15, **dadurch gekennzeichnet, dass** die Aktivkohle in Pulverform eine repräsentative Korngröße von Partikelgrößen aufweist, die kleiner als 100 µm sind, in vorteilhafter Weise zwischen 1 und 45 µm.

17. Verwendung einer Anlage nach einem der Ansprüche 1 bis 16 für die Aufbereitung von Oberflächenwasser zu Trinkwasser mit einer vorherigen Klärung des zu behandelnden Wassers.

18. Verwendung einer Anlage nach einem der Ansprüche 1 bis 16 für die Aufbereitung von Grundwasser zu Trinkwasser durch direkte Behandlung des Rohwassers.

19. Verwendung nach einem der Ansprüche 17 bis 18, **dadurch gekennzeichnet, dass** der Behandlung durch Wirbelschichtkontakt im Reaktor eine Filterung des behandelten Wassers über Granulatmedium oder über ein Membransystem folgt.

20. Verwendung nach einem der Ansprüche 17 bis 19, **dadurch gekennzeichnet, dass** neue Aktivkohle in Pulverform in einer Dosis eingeleitet wird, die imstande ist, die kontinuierliche Erneuerung der Kohlewirbelschicht zu gewährleisten, die mindestens 3 bis 5 mg/l beträgt, um organische Mikroschadstoffe auszuleiten.

21. Verwendung nach einem der Ansprüche 17 bis 19, **dadurch gekennzeichnet, dass** neue Aktivkohle in Pulverform in einer Dosis eingeleitet wird, die imstande ist, die kontinuierliche Erneuerung der Kohlewirbelschicht zu gewährleisten, die mindestens 5 bis 10 mg/l bei der Ausleitung natürlicher organischer Stoffe beträgt.

## Claims

1. A facility for treating aqueous fluid, in particular for removing organic micropollutants and natural organic matter, comprising a single reactor (10) for treating the aqueous fluid by contact with a fluidized bed of coagulated and flocculated powdered activated carbon, operating in upward flow, said reactor comprising a fluidized bed of coagulated and flocculated powdered activated carbon and being equipped with means for injecting new powdered activated carbon, coagulant and polymer, arranged so as to define in the reactor three distinct operating zones:
• a first zone arranged (A) at the base of the reactor comprising a liner advantageously consisting of a gravel bed surmounted by a sand bed to allow the intake and homogeneous distribution of the aqueous fluid pretreated by contact with the coagulant and the polymer,
• a second zone, surmounting the first, consisting of the fluidized bed of coagulated and flocculated powdered activated carbon (B), and
• a third zone (C), arranged in the upper part of the reactor for the separation and recovery of the purified aqueous liquid,
wherein,
• a hydraulic mixing is provided within the fluidized bed by means of at least one dispersion boom (12) for the aqueous fluid to be treated, arranged in the first zone (A) at the base of the reactor
• an intake boom (16) opening into the zone (B) into a height in the lower to middle part of this fluidized bed (B), said intake boom (16) being connected to the coagulant and new powdered activated carbon injection means;
• coagulant injection means connected to the aqueous feed circuit (20);
• the reactor comprises in its third zone arranged in the upper part (C), a draw off channel (24) for channelling the purified aqueous liquid.

2. The facility as claimed in claim 1, **characterized in that** a circuit for extracting used powdered activated carbon from the fluidized bed, arranged in the lower part of the second zone (B) of the reactor (10), is associated with the new powdered activated carbon injection means.

3. The facility as claimed in one of claims 1 and 2, **characterized in that** the fluidized bed of coagulated and flocculated powdered activated carbon is at concentrations of up to several grams per litre, advantageously between 1 and 10 g/l.

4. The facility as claimed in one of claims 1 to 3, **characterized in that** the hydraulic mixing is provided by a system consisting of a distributor in the form of a plurality of dispersion booms pierced with openings arranged equidistantly and directed towards the bottom of the reactor.

5. The facility as claimed in claim 4, **characterized in that** the entire aqueous liquid distribution system is embedded in a liner consisting of a gravel bed resting on the bottom of the reactor and covering the hydraulic distribution network surmounted by a sand bed.

6. The facility as claimed in one of claims 1 to 5, **characterized in that** it comprises means for injecting coagulant into the aqueous liquid feed circuit, upstream of the first intake zone arranged in the lower part of the reactor.

7. The facility as claimed in one of claims 1 to 6, **characterized in that** the means for injecting coagulant into the fluidized bed open into a height of the fluidized bed extending between its lower part and its middle part.

8. The facility as claimed in one of claims 1 to 7, **characterized in that** the means for injecting coagulant into the feed circuit are provided with a mechanical and/or static mixing system (18).

9. The facility as claimed in one of claims 1 to 8, **characterized in that** it comprises means for injecting polymer in line on the previously coagulated aqueous liquid feed circuit, and/or by means of a specific polymer injection boom arranged within the fluidized bed, immediately above the first arranged zone (A) at the lower part of the reactor (10).

10. The facility as claimed in one of claims 1 to 9, **characterized in that** it comprises a treated water recirculation circuit opening upstream of the intake boom in order to provide a function of maintaining the fluidized bed during production stoppages on the reactor.

11. The facility as claimed in one of claims 1 to 10, **characterized in that** it comprises an air introduction circuit (32) connected to the water dispersion boom.

12. The facility as claimed in one of claims 1 to 10, **characterized in that** the reactor is equipped with a sludge collection device arranged below the third upper zone (C) of the reactor in order to allow removal of the coagulated PAC sludge if necessary.

13. The facility as claimed in one of claims 1 to 12, **characterized in that** the reactor has a cylindrical shape with a circular or polygonal cross-section, the dimensions of which are chosen so as to ensure a rate of ascent of the aqueous liquid of between 6 and 10 m³/m²·h.

14. The facility as claimed in one of claims 1 to 13, **characterized in that** the reactor has an effective height of between 3.9 m and 6 m.

15. The facility as claimed in one of claims 1 to 14, **characterized in that** the powdered activated carbon has a bulk density of between 0.30 and 0.60 kg/l.

16. The facility as claimed in one of claims 1 to 15, **characterized in that** the powdered activated carbon has a particle size distribution representative of particle sizes smaller than 100 µm, advantageously between 1 and 45 µm.

17. The use of an installation as claimed in one of claims 1 to 16, for making surface water potable, involving prior clarification of the water to be treated.

18. The use of an installation as claimed in one of claims 1 to 16, for making ground water potable by direct treatment of raw water.

19. The use as claimed in one of claims 17 to 18, **characterized in that** the contact treatment of the fluidized bed in the reactor is followed by filtration of the treated water, on granular media or on a membrane system.

20. The use as claimed in one of claims 17 to 19, **characterized in that** new powdered activated carbon is injected at a dose which ensures the continuous renewal of the fluidized carbon bed, which is at least 3 to 5 mg/1 to remove organic micropollutants.

21. The use as claimed in one of claims 17 to 19, **characterized in that** new powdered activated carbon is injected at a dose which ensures the continuous renewal of the fluidized carbon bed, which is at least 5 to 10 mg/1 in the removal of natural organic matter.
